# EUROPEAN PATENT APPLICATION

(11) **EP 3 404 869 A1**
(43) Date of publication of application: **21.11.2018**
(21) Application number: 16885170.7
(22) Date of filing: 01.02.2016
(51) Int. Cl.: H04L 12/24, H04L 29/06, H04L 29/10

(54) **INFORMATION TRANSMISSION APPARATUS OF CONTEXT AWARENESS-BASED HEALTH CARE DEVICE**

(30) Priority: 11.01.2016 KR 20160003107
(71) Applicant: Induswell Corporation, Seoul 06122 (KR)
(72) Inventor: YOON, Tae Ho, Seoul 06122 (KR)
(74) Representative: Müller Verweyen
(86) International application number: PCT/KR2016/001060
(87) International publication number: WO 2017/122858

(57) **Abstract**

The present invention relates to an information transmission apparatus of a context awareness-based healthcare device, which converts a non-standard healthcare device into a standard data format, converts formats of biometric information and context information acquired from a healthcare device and then transmits the format-converted biometric information and context information in real time, and comprises both agent and manager attributes. The information transmission apparatus of the context awareness-based healthcare device is implemented comprising: an information converter for converting biometric information and context awareness information, which are acquired from a healthcare device and a context awareness sensor, into a standard data format, and outputting the converted information; and a gateway for collecting, in real time, the standardized biometric information and context information from the information converter, and outputting the collected information to a smart home service server.

## Description

### [Technical Field]

The present invention relates to an information transmission apparatus of a context awareness-based healthcare device, more particularly, to an information transmission apparatus of a context awareness-based healthcare device which can convert a non-standard healthcare device into a standard data format, convert formats of biometric information and context information acquired from a healthcare device and transmit the format-converted biometric information and context information in real time, and has both agent and manager attributes.

### [Background Art]

Recently, a smart home technology, which is a technology for controlling all devices provided in a home including home appliances by connecting the devices, has been proposed.

The smart home technology refers to a technique for monitoring and controlling all devices of various fields including home appliances (TV, air conditioner, refrigerator, and the like) and energy consumption devices (water supply, electricity supply, cooling and heating devices and the like) as well as security devices (door locks, surveillance cameras, and the like) by connecting the devices through a network. The devices used in the smart home technology can be operated automatically or can be remote-controlled according to the characteristics of the user.

In order to control all devices provided in a home by connecting the all devices in a smart home, a gateway or a wired/wireless router, which connects a control server with all control devices provided in the home through a network, is used.

The gateway or the wired/wireless router is required to standardize the conventional healthcare device and biometric signal measurement device through analysis of applicability in the residential space, and to have an agent function of converting a format as required by a gateway (manager).

Meanwhile, related arts for a smart home system are disclosed in following Patent Document 1 (Korean Unexamined Patent Publication No. 10-2013-0080278, published on July 12, 2013) and Patent Document 2 (Korean Patent Publication No. 10-1037397, issued on May 30, 2011).

The related art disclosed in Patent Document 1 includes an IR relay server having a server communication unit which can make data communication with a smart phone through a wireless communication network such as Wi-Fi, and an infrared transmitting unit for generating and transmitting an infrared signal for controlling a digital device. The IR relay server receives an image from at least one camera capable of photographing an indoor image at an office or home to transmit the image to a smart phone, and receives a digital device driving signal transmitted from the smart phone to generate and transmit an infrared signal corresponding to the digital device driving signal, thereby implementing a home automation system, which can control a plurality of digital devices provided in an indoor space from the outside, with a low cost and simple equipment.

The related art disclosed in Patent Document 2 is a digital device control system using a smart phone, which includes a smart phone having an application of a remote control function, a digital device of which on/off of a power supply, channel or volume is controlled according to a signal received from the smart phone, and a central control unit connected to the smart phone through Bluetooth or Wi-Fi communication and connected to the digital device through a plurality of infrared ray communications in order to remotely control the digital device, and therefore, the digital device can be controlled by using the smart phone instead of a remote controller.

### [Disclosure]

### [Technical Problem]

However, although the above related art can acquire biometric information and context information by using a standard healthcare device, if the existing healthcare device is a non-standard healthcare device, the healthcare device cannot be utilized instantly in the gateway, and there is a need to additionally use a separate data interface and a format conversion module.

Especially, the related art has a disadvantage in that the non-standard healthcare device cannot be directly connected in the gateway and a new healthcare device cannot be instantly added to the gateway in real time.

Accordingly, the present invention has been made to solve the above-mentioned problems occurring in the related art, and it is an object of the present invention to provide an information transmission apparatus of a context awareness-based healthcare device which can convert a non-standard healthcare device into a standard data format, convert formats of biometric information and context information acquired from a healthcare device and transmit the format-converted biometric information and context information in real time.

It is another object of the present invention to provide an information transmission apparatus of a context awareness-based healthcare device having both an agent attribute capable of converting a format as required by a gateway and a manager attribute.

### [Technical Solution]

In order to accomplish the above objects, there is provided an information transmission apparatus of a context awareness-based healthcare device, the information transmission apparatus including: an information converter for converting biometric information and context awareness information, which are acquired from a healthcare device and a context awareness sensor, respectively, into a standard data format, and outputting the converted information; and a gateway for collecting, in real time, the standardized biometric information and context information from the information converter, and outputting the collected information to a smart home service server.

The information converter may convert the biometric information and the context information acquired from the healthcare device and the context awareness sensor into a format required by the ISO/IEEE 11073 standard or the gateway, and may transmit the converted biometric information and the context information to the gateway.

The information converter may include an interface unit that receives the biometric information from the healthcare device and interfaces personal authentication identification information from a personal authentication identification device; and a context awareness information processing unit that recognizes a context based on the context information acquired from a plurality of context awareness sensors, performs a corresponding control operation, and transmits the context information.

The context information may be a data requested according to a context of a service, may include at least one of user information, device information, service feedback information, and context information, and request information for the context information may be changed according to a type of the service.

The context awareness information processing unit may include: a context awareness unit that acquires the context information from the context awareness sensor, analyzes the context information to determine the context, and performs a control operation according to the context information; a service feedback processing unit for feedback-processing service information; and a context awareness feedback processing unit for feedback-processing the context awareness information according to the context information recognized by the context awareness unit.

The information converter may include: an operating unit for managing an overall operation related to conversion and transmission of the biometric information and context information; and a healthcare information converting unit for converting the biometric information acquired from the healthcare device into a standard format or bypassing the biometric information.

The healthcare information converting unit may generate healthcare conversion information by summing the biometric information acquired from the healthcare device and the context information processed by the context awareness information processing unit.

The healthcare information converting unit may include: an informatization unit for generating the healthcare conversion information by summing the healthcare information and the context information; and a standardization unit that encodes the healthcare conversion information generated by the informatization unit into a standard format or a format required by the gateway.

The healthcare information converting unit may include an encryption unit for encrypting the healthcare conversion information to secure the information, and the encryption unit may encrypt a part or all of the biometric information and the context information.

### [Advantageous Effects]

According to the present invention, there is an advantage that the non-standard healthcare device can be converted into a standard data format, formats of biometric information and context information acquired from the healthcare device can be converted and the format-converted biometric information and context information can be transmitted in real time.

According to the present invention, there is an advantage that an information converter having both an agent attribute capable of converting a format as required by a gateway and a manager attribute can be provided.

In addition, according to the present invention, there is an advantage that information of a new healthcare device and a context awareness sensor can be easily collected and converted even when the healthcare device and the context awareness sensor are newly installed.

### [Description of Drawings]

FIG. 1 is a view showing an overall configuration of an information transmission apparatus and peripheral devices of a context awareness healthcare device according to a preferred embodiment of the present invention.
FIG. 2 is a system configuration diagram of a healthcare device, an information converter, and a gateway of FIG. 1.
FIG. 3 is a schematic view showing a configuration between an information converter and peripheral devices thereof shown in FIG. 1.
FIG. 4 is a view showing a configuration of an information converter shown in FIG. 3.
FIG. 5 is an exemplary view showing contents of biometric information (contents of biometric information of a blood pressure monitor).
FIG. 6 is a view showing a configuration of biometric information of a blood pressure monitor.
FIG. 7 is a diagram showing an example of contents of context information (content of context information of a blood pressure monitor).
FIG. 8 is an exemplary view showing context information of a blood pressure monitor.
FIG. 9 is an exemplary view showing a configuration of healthcare conversion information according to the present invention.
FIG. 10 is an exemplary view showing a configuration of healthcare conversion information.
FIG. 11 is a view showing a configuration of healthcare conversion information of type 1.
FIG. 12 is an exemplary view showing parameters of healthcare conversion information of type 1.
FIG. 13 is a diagram showing a message format of type 1 (ADPU format).
FIG. 14 is a diagram showing a message format of type 1 (JSON format).
FIG. 15 is a view showing a configuration of healthcare conversion information of type 2.
FIG. 16 is an exemplary view showing parameters of healthcare conversion information of type 2.
FIG. 17 is a view showing a message format diagram of type 2 (ADPU format).
FIG. 18 is a view showing a message format of type 3 (JSON format).
FIG. 19 is a view showing a configuration of healthcare conversion information of type 3.
FIG. 20 is an exemplary view showing parameters of healthcare conversion information of type 3.
FIG. 21 is a view showing a message format of type 3 (ADPU format).
FIG. 22 is a view showing a message format of type 3 (JSON format).
FIG. 23 is an exemplary view showing a first transmission method of healthcare conversion information.
FIG. 24 is a flowchart showing a procedure for processing healthcare reception data.
FIG. 25 is an exemplary view showing a second transmission method of healthcare conversion information.

### [Modes of the Invention]

Hereinafter, an information transmission apparatus of a context awareness healthcare device according to a preferred embodiment of the present invention will be described in detail with reference to the accompanying drawings.

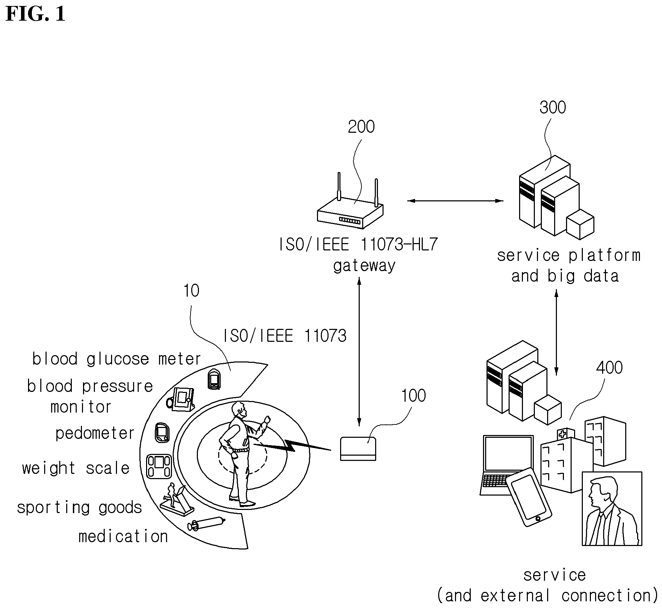

FIG. 1 is a view showing an overall configuration of an information transmission apparatus and peripheral devices of a context awareness healthcare device according to a preferred embodiment of the present invention.

The information transmission device and the peripheral devices of the context awareness healthcare device according to the present invention include a healthcare device 10, an information converter 100, a gateway 200, a service platform 300, and a service server 400.

The service platform 300 collects user-specific healthcare information collected from the gateways 200 and transmits the collected healthcare information to the service server 400. The service platform 300 transmits request information requested from the service server 400 to the corresponding gateway 200.

The service server 400 receives and analyzes the user-specific healthcare information, performs statistical processing based on the analysis results, and takes a follow-up action according to the health state of the user. The follow-up action may include delivery of health state information to the user, transmission of the user's health state information to the relevant authorities, and the like.

The gateway 200 is provided in a residential space or residential environment and acquires biometric information and context information from the information converter 100 in real time to transmit the biometric information and the context information to the service server 400. In addition, the gateway 200 receives request data from the service server 400 to transmit the request data to the information converter 100.

The information converter 100 converts biometric information and context awareness information acquired from the healthcare device and a context awareness sensor into a standard data format and outputs the biometric information and context awareness information.

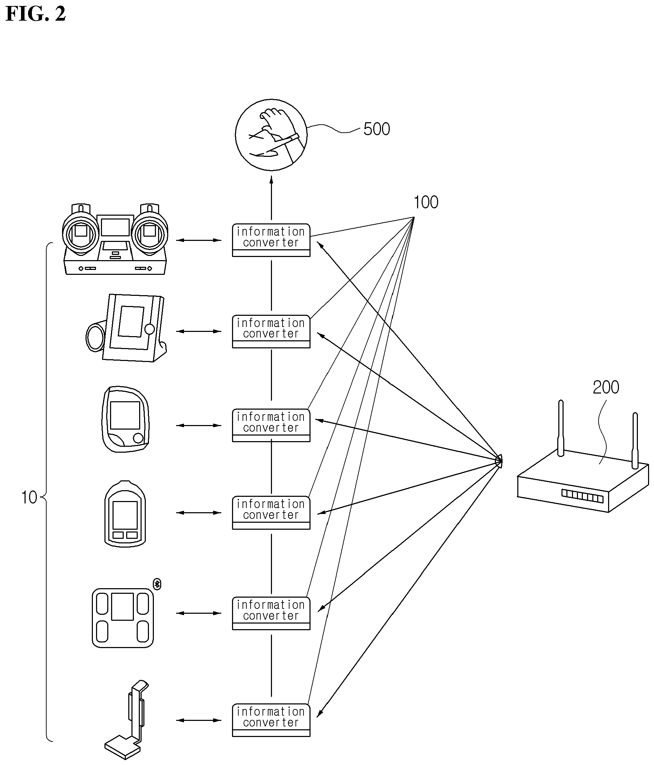

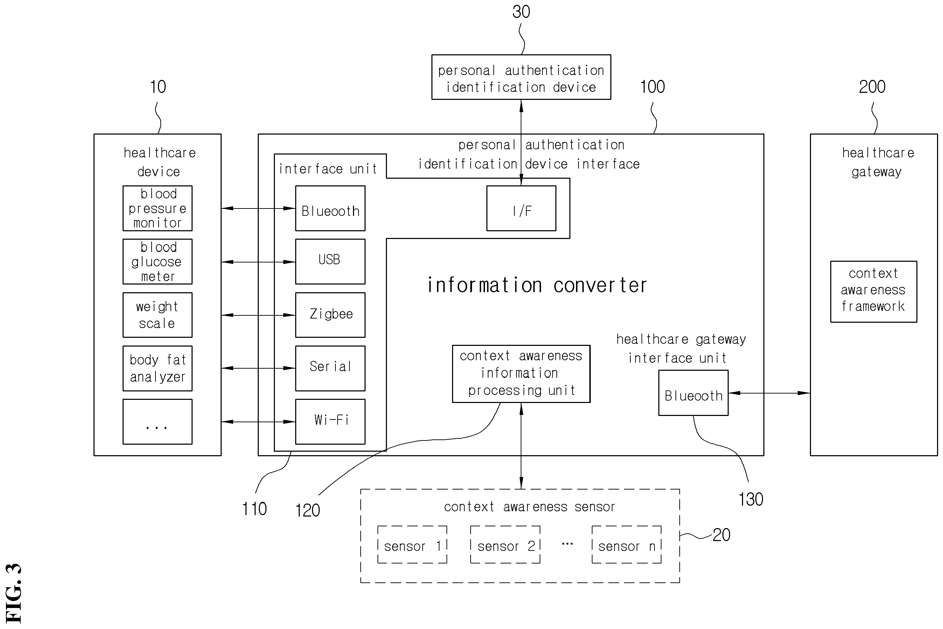

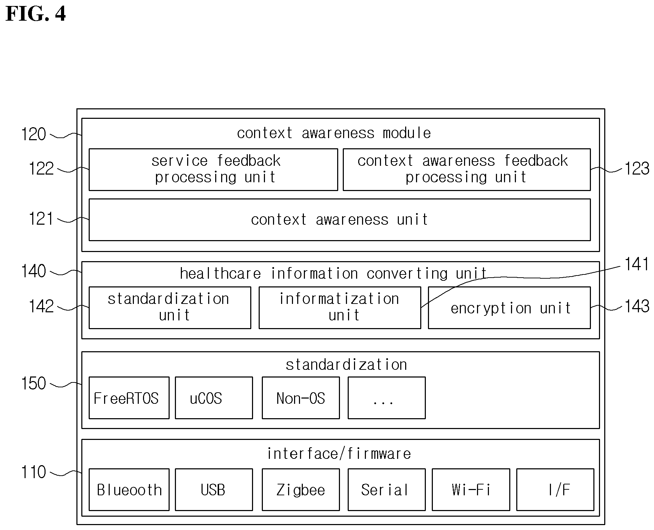

As shown in FIGS. 2 to 4, the information converter 100 converts the biometric information and the context awareness information acquired from the healthcare device 10 and the context awareness sensor 20 into an ISO/IEEE 11073 standard format or a format required by the gateway 200 and transmit the converted format to the gateway 200.

The information converter 100 includes an interface unit 110 that receives the biometric information from the healthcare device 10 and interfaces personal authentication identification information from a personal authentication identification device 30. The interface unit 110 may include a Bluetooth module, a ZigBee module, a Wi-Fi module, a serial communication module for a wired interface, a USB port, and an interface (I/F) for making short-range wireless communication with the healthcare devices.

In addition, the information converter 100 includes a context awareness information processing unit 120 that recognizes the context based on the context information acquired from a plurality of context awareness sensors 20, performs a corresponding control operation, and transmits the context information 120.

The context information is data requested according to the context of the service, and includes at least one of user information, device information, service feedback information, and context information, and the context information is preferably changed according to the service type.

The context awareness information processing unit 120 includes a context awareness unit 121 for acquiring context information acquired from the context awareness sensor 20, analyzing the context information to determine a context, and performing a control operation according to the context; a service feedback processing unit 122 for feedback-processing service information; and a context awareness feedback processing unit 123 for feedback-processing the context awareness information according to the context information recognized by the context awareness unit 121.

In addition, the information converter 100 includes an operating unit 150 for managing the overall operation related to conversion and transmission of the biometric information and context information. The operating unit 150 may use operating systems such as FreeRTOS, uCOS, and Non-OS for system operation.

The information converter 100 includes a healthcare information converting unit 140 for bypassing the biometric information acquired from the healthcare device 10 or converting the biometric information into a standard format. The healthcare information converting unit 140 may combine the biometric information acquired from the healthcare device 10 and the context information processed by the context information processing unit 120 to generate healthcare conversion information.

The healthcare information converting unit 140 includes an informatization unit 141 for generating the healthcare conversion information by combining the healthcare information and context information; and a standardization unit 142 for encoding the healthcare conversion information generated by the informatization unit 141 into a standard format or a format required by the gateway 200.

The healthcare information converting unit 140 includes an encryption unit 143 that encrypts the healthcare conversion information to improve the security of information. The encryption unit 143 may encrypt a part or all of the biometric information and the context information.

Hereinafter, the operation of the information transmission apparatus of the context awareness healthcare device according to the preferred embodiment of the present invention will be described in detail.

First, the information converter 100 is interposed between the healthcare device 10 and the gateway 200 in order to acquire the biometric information from the healthcare device 10 installed in a residential space or residential environment for implementing the smart home and transmit the biometric information to the gateway 200. The information converter 100 may be connected to a plurality of context awareness sensors 20 to acquire the context information.

The information converter 100 may be installed in a one-to-one correspondence with one healthcare device, or may be installed to interface a plurality of healthcare devices. The information converter 100 has a manager attribute for supporting a healthcare device interface as well as an agent attribute for acquiring, collecting and converting information to transmit the converted information to the gateway 200.

For example, the information converter 100 is equipped with the manager attribute for acquiring the information through an interface with a healthcare device, a sensor, and a measurement device, as well as the healthcare agent attribute for processing the acquired information to transmit data to a gateway, a smartphone, a smart pad, a PC, and the like.

In addition, the information converter 100 receives authentication information for authenticating a person by interworking with a personal authentication identification device 30 for identifying a person, and processes the personal authentication by interworking with the gateway 200.

In a state in which the smart home system is implemented in the above manner, the operating unit 150 of the information converter 100 may perform the overall control operation by using a preset operating system (application) such as acquiring the biometric information and context information, analyzing the acquired context information, converting and transmitting the biometric information and context information, and transferring control commands to the corresponding sensors. The operating unit 150 may initialize the healthcare device and the context awareness sensors.

Under the control of the operating unit 150, the interface unit 110 acquires the biometric information by using a Bluetooth module, a ZigBee module, a Wi-Fi module, a serial communication module for a wired interface, and a USB port for short-range wireless communication with the healthcare devices 10. The healthcare devices can be used without restrictions, whether they are healthcare devices using standard formats, non-standard healthcare devices, existing healthcare devices, or newly installed healthcare devices. In addition, the interface unit 110 can acquire identification information (e.g., a user ID) for personal authentication through the interface with the personal authentication identification device 30.

The biometric information and personal authentication identification information acquired by the interface unit 110 are transmitted to the healthcare information converting unit 140.

Meanwhile, the context awareness information processing unit 120 recognizes the context based on the context information acquired from the plurality of context awareness sensors 20, performs a control operation corresponding to the context, and transmits the context information to the healthcare information converting unit 140.

The context information is data requested according to the context of the service, and includes at least one of user information (user ID), device information, service feedback information, and current context information. Request information for the context information may be changed according to the service type.

For example, the context awareness unit 121 of the context awareness information processing unit 120 acquires the context information from the context awareness sensor 20, analyzes the context information to determine the context, and performs an operation corresponding to the context. That is, according to the context awareness algorithm and the judgment condition formula stored in the context awareness unit 121 for the 24 hour healthcare service for indoor and outdoor use, the healthcare conversion information is transmitted and the operation suitable for the context is performed (actuator operation, LCD information display, or alarms such as sound/vibration). The service feedback processing unit 122 feedback-processes the service information. In addition, the context awareness feedback processing unit 123 feedback-processes the context awareness information according to the context information recognized by the context awareness unit 121.

Therefore, when an instruction of an operation or a new instruction command is fed back to the context awareness algorithm according to a previously set condition, a new condition or algorithm may be updated and stored in the context awareness unit 121. The context awareness unit 121 may always be kept in a standby state to store a new update in an EEPROM.

The internal algorithm of the context awareness algorithm is stored or updated according to the 24 hour healthcare service for indoor and outdoor use and transmitted and received according to the transmission of the healthcare conversion information, but the information converter 100 having both the agent and manager attributes provides an optimal solution for the 24 hour healthcare service for indoor and outdoor use by providing a context awareness algorithm API to use context aware algorithms. Therefore, the information converter 100 having both the agent and the manager attributes provides the context awareness algorithm API for the context awareness algorithm, so that the healthcare conversion information according to the 24 hour healthcare service for indoor and outdoor use can be used.

Next, the healthcare information converting unit 140 converts the various pieces of biometric information acquired through the interface unit 110 and the context information processed by the context awareness information processing unit 120 into a standard format or a format required by the gateway or bypasses the biometric information and the context information. In this case, the healthcare information converting unit 140 combines the biometric information acquired from the healthcare device 10 and the context information processed by the context information processing unit 120 to generate healthcare conversion information.

To this end, the informatization unit 141 of the healthcare information converting unit 140 combines the healthcare information and the context information to generate the healthcare conversion information. The biometric information of the healthcare device and the context information necessary for the 24 hour healthcare service for indoor and outdoor use are collectively called healthcare conversion information.

The biometric information refers to measurement values measured by a healthcare device, such as a blood pressure monitor, a blood glucose meter, a weight scale, and a body fat analyzer, and device information.

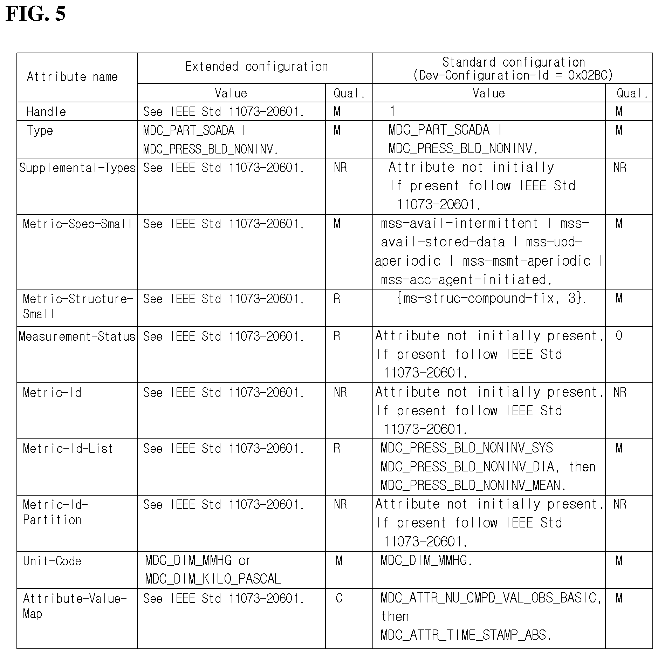

FIG. 5 is an exemplary view showing contents of the biometric information in which contents of biometric information of a blood pressure monitor are illustrated.

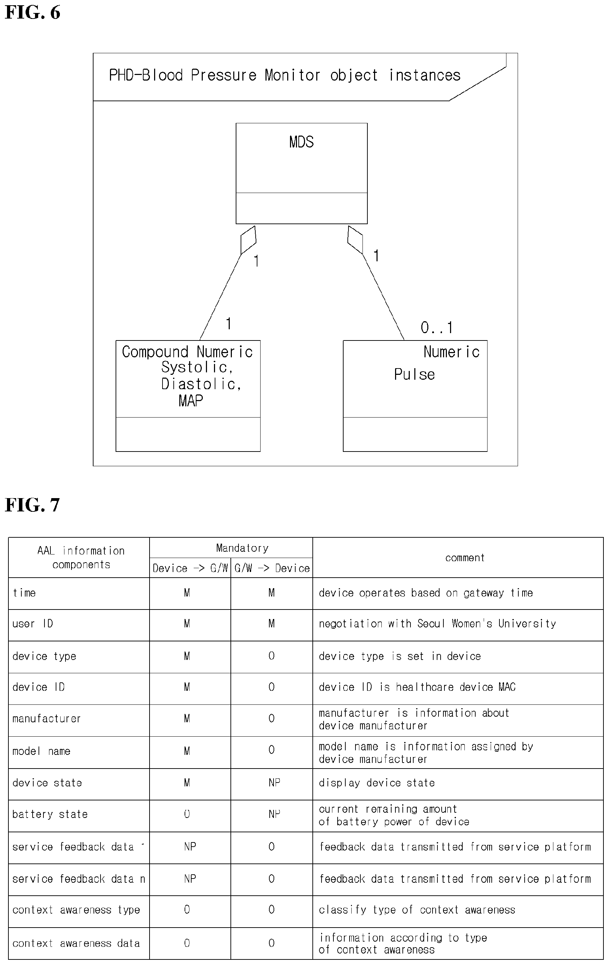

The biometric information is data defined in the device specialization of IEEE 11073-104zz, and includes DIM information as shown in FIG. 6. FIG. 6 shows an example of the biometric information of the blood pressure monitor.

The context information includes user ID, device information, service feedback information, and context awareness information used for 24 hour healthcare service for indoor and outdoor use as well as information defined in IEEE 11073-20601.

FIG. 7 is an exemplary view showing contents of the context information in which contents of context information of the blood pressure monitor are illustrated.

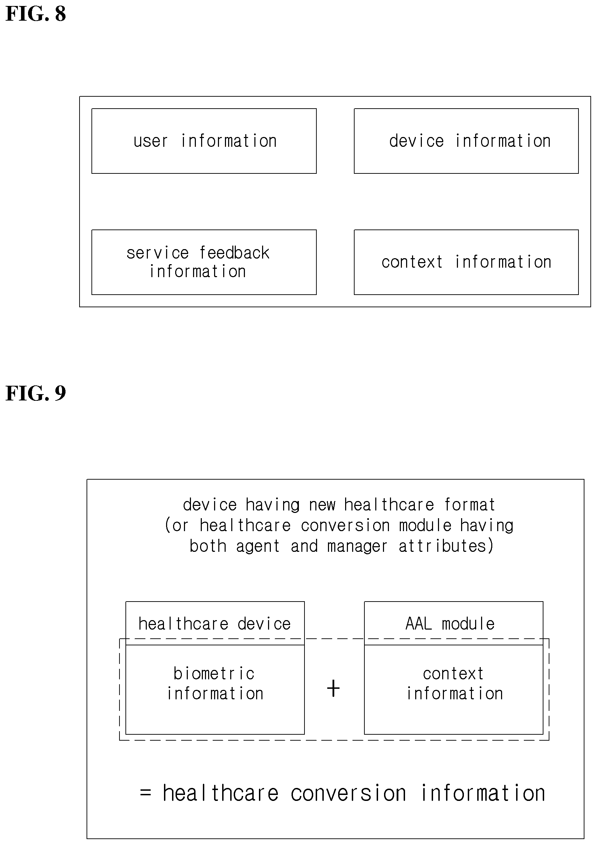

As described above, the context information is data requested according to the service context, and includes user information, device information, service feedback information, context awareness information, and the like and request information for the context information may be changed according to the service type. As shown in FIG. 8, the context information of the blood pressure monitor also includes user information, device information, service feedback information, and context information.

Meanwhile, as shown in FIG. 9, the healthcare conversion information converted by the information converting unit 141 of the information converter 100 having both the agent and manager attributes may include biometrics and context data.

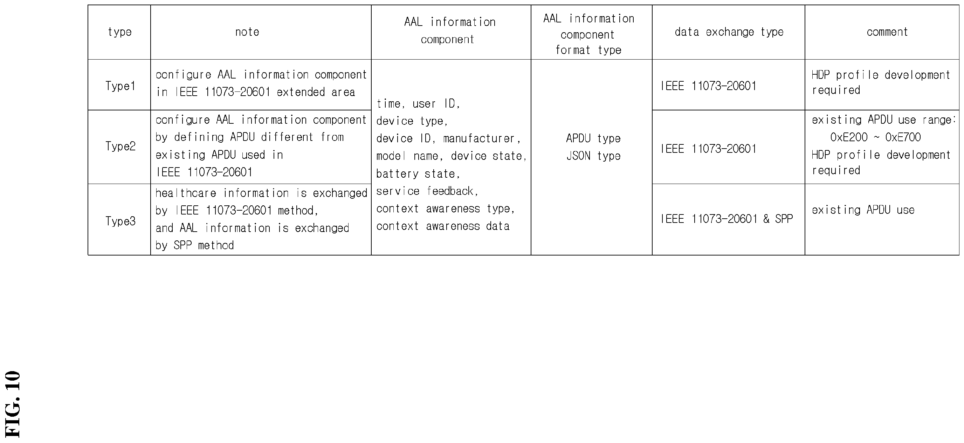

The configuration of the healthcare conversion information is shown in FIG. 10. As shown in FIG. 10, the standard HDP is basically used, and the healthcare conversion information is transmitted/received by extending the HDP or by using the SPP profile of Bluetooth.

The configuration of the healthcare conversion information may be provided in various types.

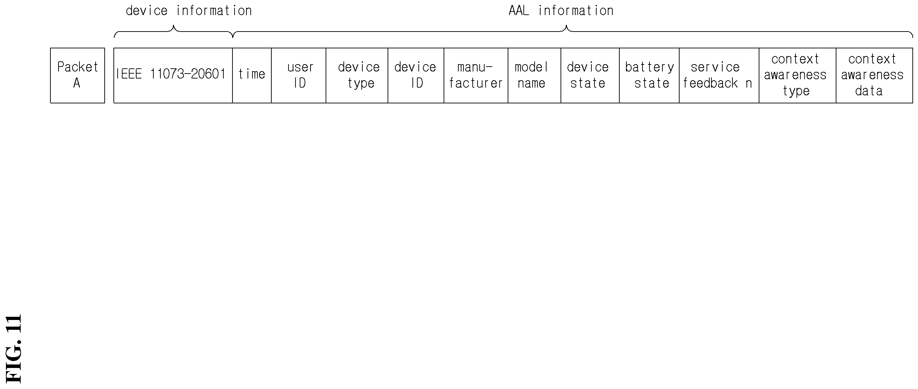

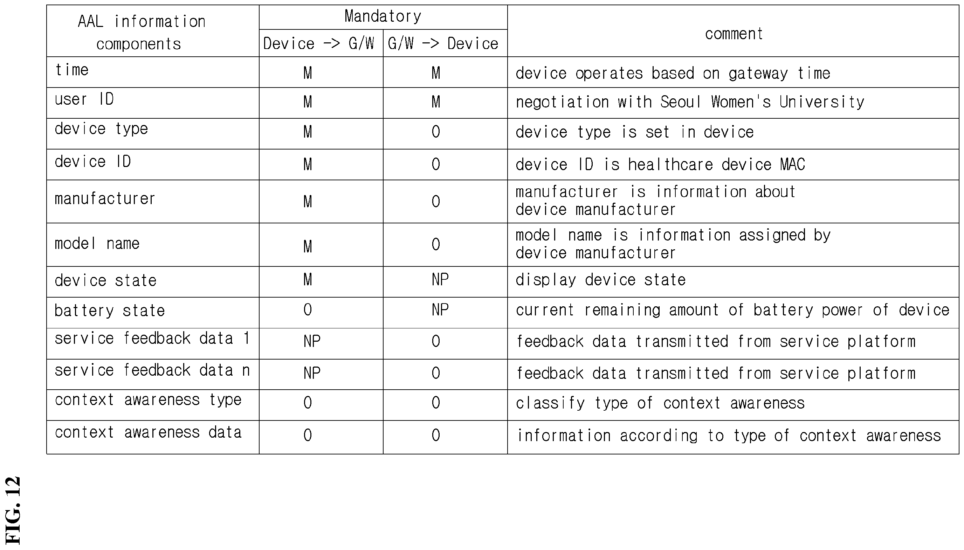

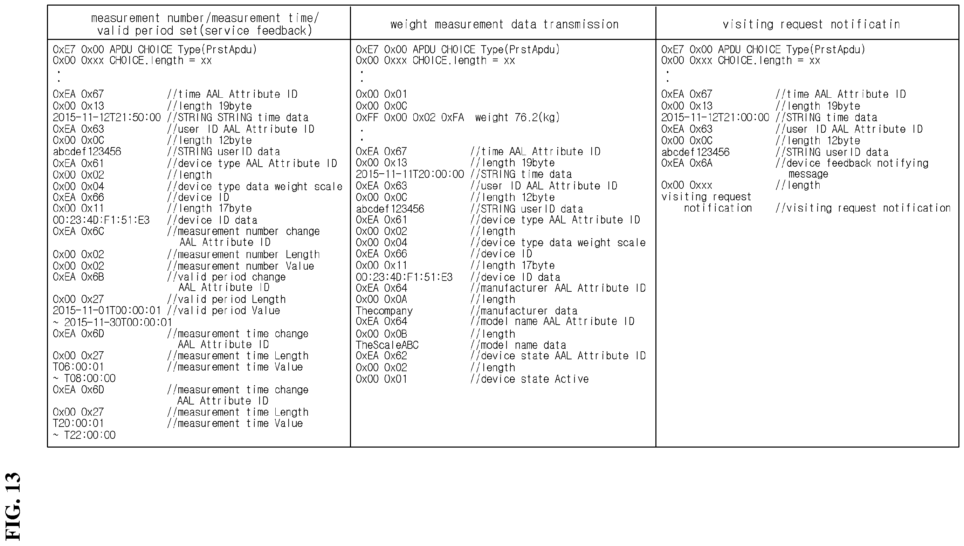

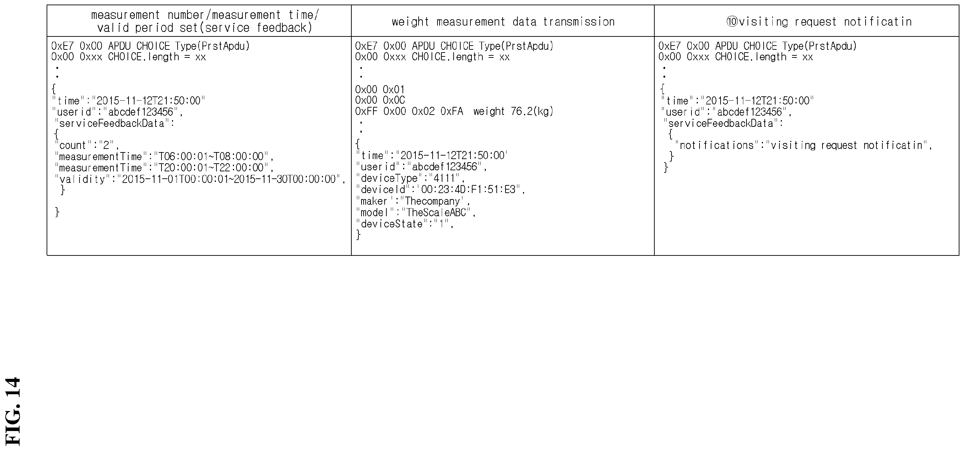

For example, as shown in FIG. 11, the healthcare conversion information can be transmitted/received by using the Bluetooth HDP (type 1). The components of the healthcare conversion information for type 1 are shown in FIG. 12. In addition, a message of type 1 has an APDU format as shown in FIG. 13. FIG. 14 shows a format of a message of type 1, which is a JSON format.

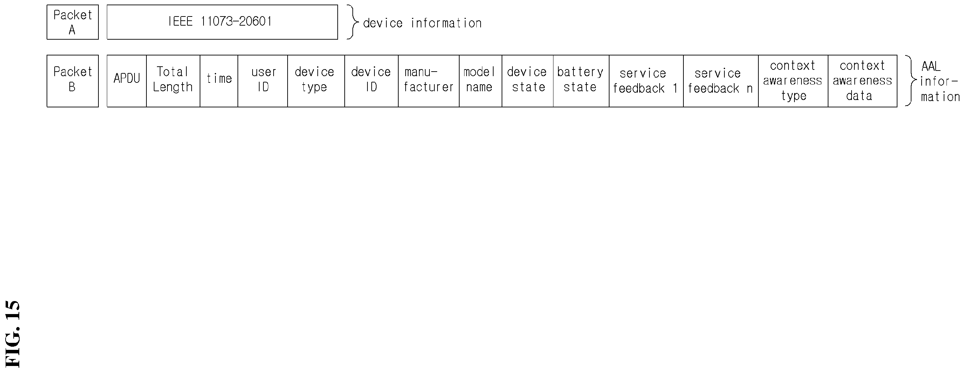

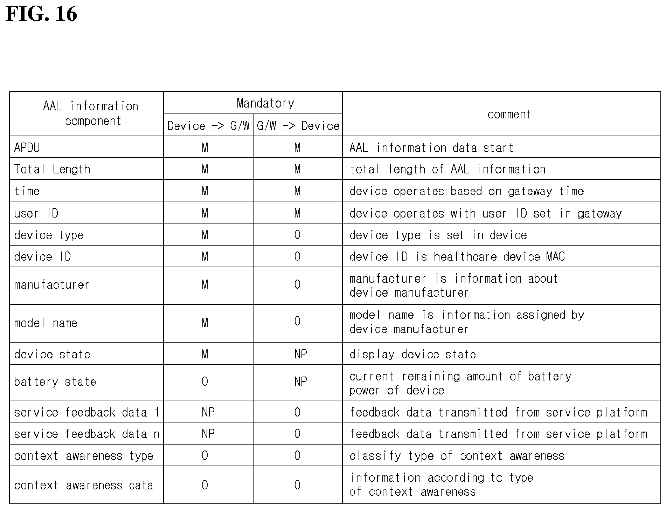

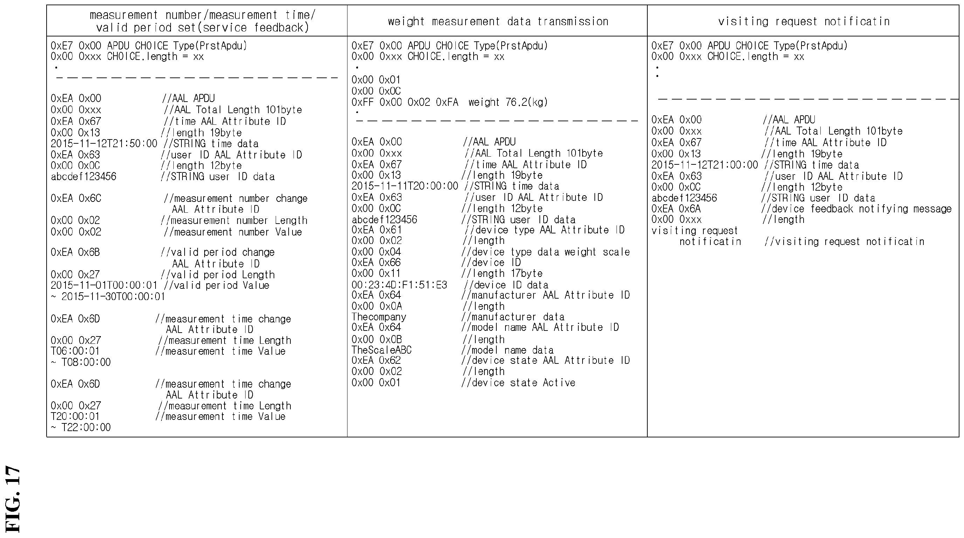

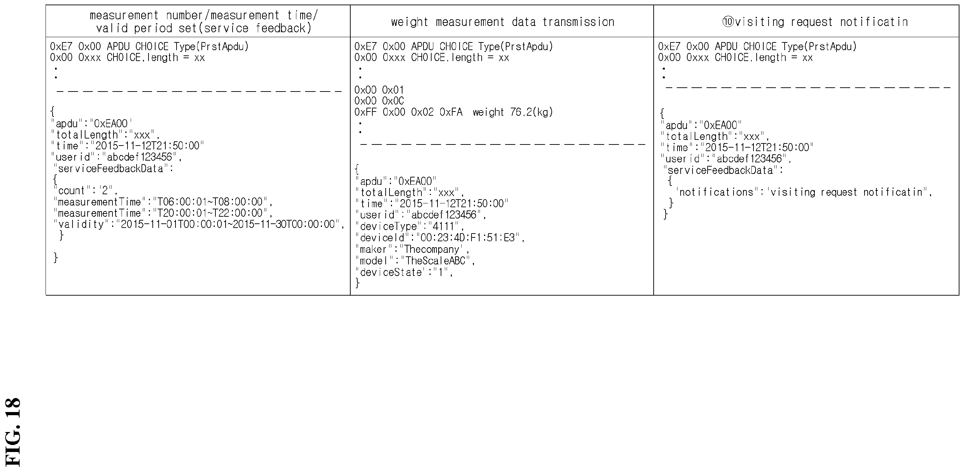

In addition, as shown in FIG. 15, the healthcare conversion information can be transmitted/received by using the Bluetooth HDP (type 2). The components of the healthcare conversion information for type 2 are shown in FIG. 16. In addition, the message of type 2 has the APDU format as shown in FIG. 17. FIG. 18 shows the format of a message of type 2, which is JSON format.

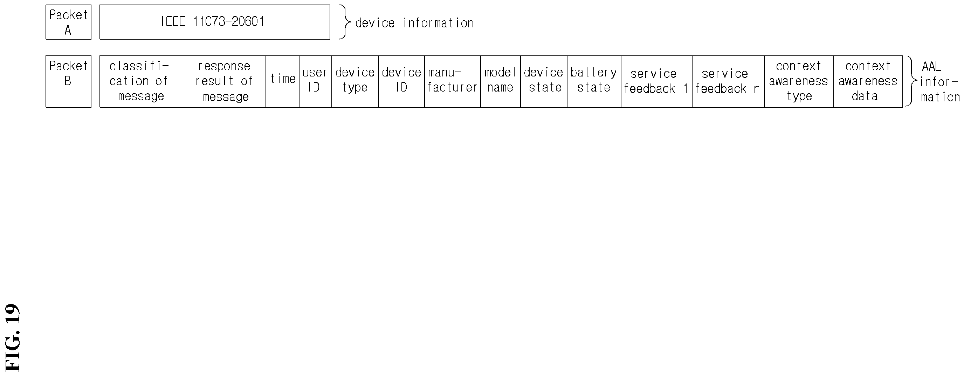

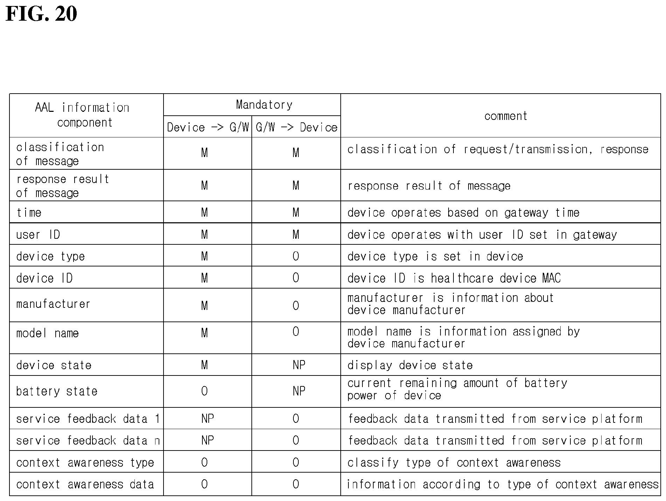

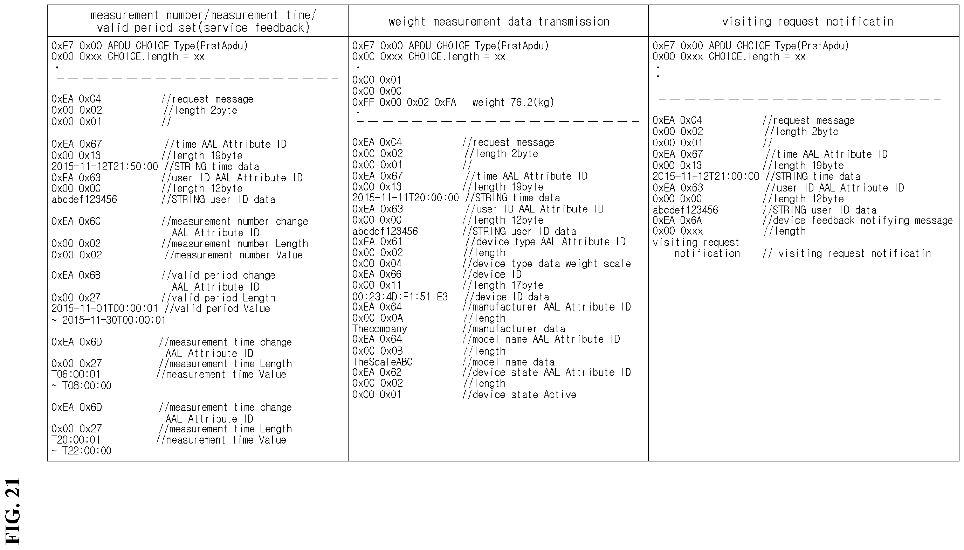

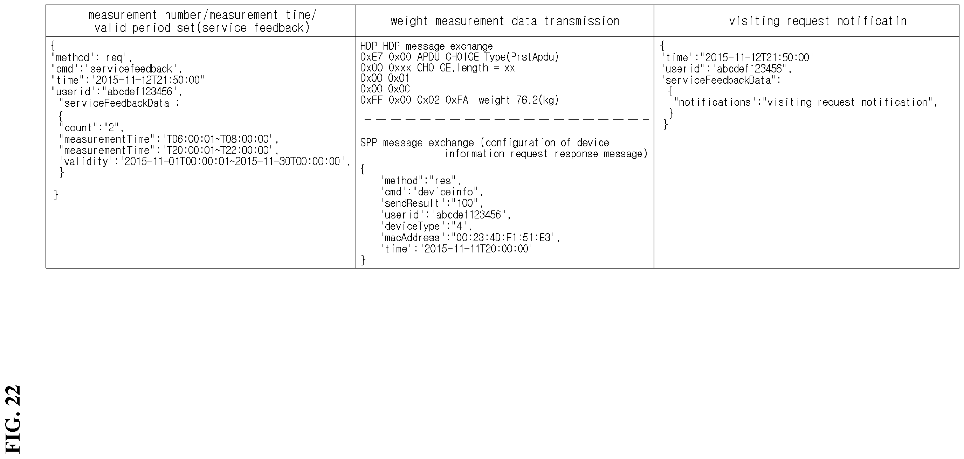

Further, as shown in FIG. 19, the healthcare conversion information can be transmitted/received by using the Bluetooth HDP and SPP (type 3). The components of the healthcare conversion information for type 3 are shown in FIG. 20. In addition, a message of type 3 has an APDU format as shown in FIG. 21. FIG. 22 shows a format of type 3, which is a JSON format.

The healthcare conversion information generated by the informatization unit 141 may be encrypted by the encryption unit 143. The encryption can be performed by using a public key or various encryption algorithms generally known in the art. The encryption can be performed with respect to a part or all of the biometric information and the context information.

The encrypted healthcare conversion information or the unencrypted healthcare conversion information is converted into a standard format through the standardization unit 142.

In the standardization process, the standardization unit 142 of the information converter 100 having both the agent and the manager attributes receives the existing healthcare device bio-signal measurement data, converts the data into the format of the IEEE 11073 standard and transmits the healthcare conversion information to the gateway 200. Then, the healthcare conversion information, in which the data is converted into the standard format, is transmitted to the gateway 200 according to the transmission protocol by using the Bluetooth HDP. That is, the standardization may be achieved through the communication between the agent and the manager by using the IEEE 11073 protocol and a Bluetooth HDP (health device profile).

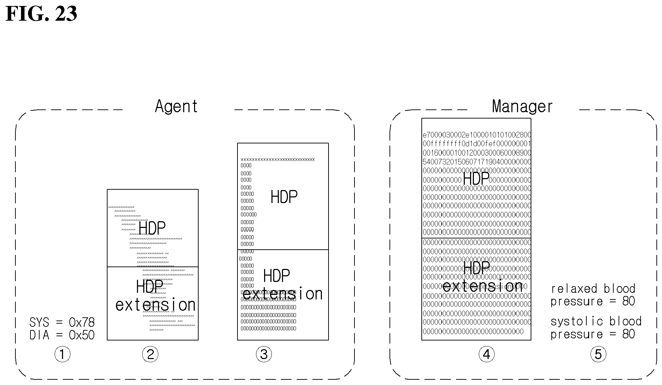

FIG. 23 shows a first example of a transmission method for the healthcare conversion information. The transmission may be performed by defining an extension area of the HDP or a new ADPU, and the gateway 200 receives the data according to the new APDU protocol.

The standardization method includes the connection of non-standard healthcare devices, the transmission of non-standard healthcare device measurement data, the standard format conversion of non-standard healthcare data, and the data transmission using Bluetooth HDP.

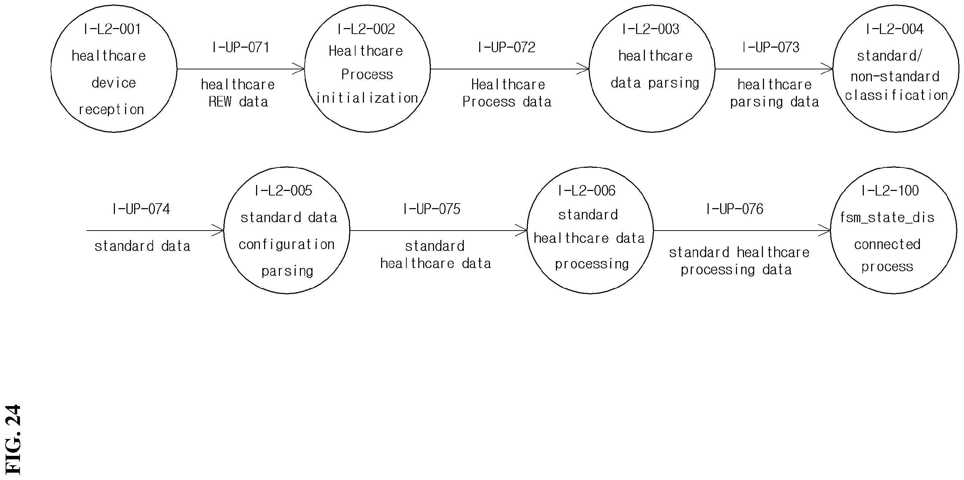

FIG. 24 shows a procedure for processing data of the healthcare information received from the healthcare device.

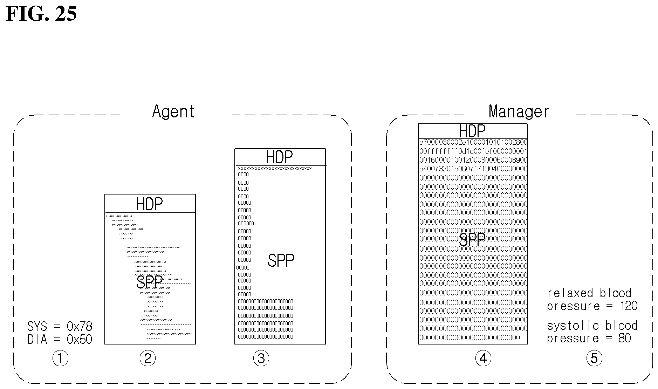

FIG. 25 is a second example of a transmission method for the healthcare conversion information. The transmission may be achieved through the communication between the agent and the manager by using the IEEE 11073 protocol (method 1) or by using the SPP (serial port profile) (method 2).

Although the present invention has been described in detail with reference to the embodiments, the present invention is not limited to the above-described embodiments, and various modifications may be made without departing from the scope of the present invention.

### [Industrial applicability]

The present invention can be applied to a technique of acquiring the healthcare information and context information from the healthcare devices and the context awareness sensors and transmitting the healthcare information and context information to the gateway to implement the smart home.

## Claims

1. An information transmission apparatus of a context awareness-based healthcare device, the information transmission apparatus comprising:
an information converter for converting biometric information and context awareness information, which are acquired from a healthcare device and a context awareness sensor, respectively, into a standard data format, and outputting the converted information; and
a gateway for collecting, in real time, the standardized biometric information and context information from the information converter, and outputting the collected information to a smart home service server.

2. The information transmission apparatus of claim 1, wherein the information converter converts the biometric information and the context information acquired from the healthcare device and the context awareness sensor into a format required by the ISO/IEEE 11073 standard or the gateway, and transmits the converted biometric information and the context information to the gateway.

3. The information transmission apparatus of claim 1, wherein the information converter comprises:
an interface unit that receives the biometric information from the healthcare device and interfaces personal authentication identification information from a personal authentication identification device; and
a context awareness information processing unit that recognizes a context based on the context information acquired from a plurality of context awareness sensors, performs a corresponding control operation, and transmits the context information.

4. The information transmission apparatus of claim 3, wherein the context information is a data requested according to a context of a service, includes at least one of user information, device information, service feedback information, and context information, and request information for the context information is changed according to a type of the service.

5. The information transmission apparatus of claim 3, wherein the context awareness information processing unit comprises:
a context awareness unit that acquires the context information from the context awareness sensor, analyzes the context information to determine the context, and performs a control operation according to the context information;
a service feedback processing unit for feedback-processing service information; and
a context awareness feedback processing unit for feedback-processing the context awareness information according to the context information recognized by the context awareness unit.

6. The information transmission apparatus of claim 1, wherein the information converter comprises:
an operating unit for managing an overall operation related to conversion and transmission of the biometric information and context information; and
a healthcare information converting unit for converting the biometric information acquired from the healthcare device into a standard format or bypassing the biometric information.

7. The information transmission apparatus of claim 6, wherein the healthcare information converting unit generates healthcare conversion information by summing the biometric information acquired from the healthcare device and the context information processed by the context awareness information processing unit.

8. The information transmission apparatus of claim 7, wherein the healthcare information converting unit comprises:
an informatization unit for generating the healthcare conversion information by summing the healthcare information and the context information; and
a standardization unit that encodes the healthcare conversion information generated by the informatization unit into a standard format or a format required by the gateway.

9. The information transmission apparatus of claim 8, wherein the healthcare information converting unit comprises an encryption unit for encrypting the healthcare conversion information to secure the information, and the encryption unit encrypts a part or all of the biometric information and the context information.
